# EUROPÄISCHE PATENTSCHRIFT

(11) **EP 1 262 744 B1**
(45) Veröffentlichungstag und Bekanntmachung des Hinweises auf die Patenterteilung: **28.10.2015**
(21) Anmeldenummer: 02011014.4
(22) Anmeldetag: 17.05.2002
(51) Int. Cl.: G01F 23/24, B01D 36/00, F02M 37/22

(54) **Sensormodul zur Ermittlung eines Flüssigkeitspegels**
Sensor module for the determination of a liquid level
Module de capteur pour déterminer un niveau de liquide

(30) Priorität: 26.05.2001 DE 10125827; 20.10.2001 DE 10152257
(43) Veröffentlichungstag der Anmeldung: 04.12.2002
(73) Patentinhaber: ROBERT BOSCH GMBH, 70442 Stuttgart (DE)
(72) Erfinder: Sancho de Castro, Manuel, 37007 Salamanca (ES)

(56) Entgegenhaltungen:
- EP-A- 1 037 028
- DE-A- 2 558 228
- DE-A- 19 613 813
- FR-A- 2 520 866
- FR-A- 2 746 916
- US-A- 3 956 760
- US-A- 4 182 363
- US-A- 4 745 893

## Beschreibung

### Stand der Technik

Die Erfindung geht aus von einem Sensormodul zur Ermittlung eines Flüssigkeitspegels nach der im Oberbegriff des Anspruchs 1 näher angegebenen Gattung.

In einer älteren Anmeldung nach Az 100 20 081.8 wurde bereits ein Sensormodul vorgeschlagen, mit dem der Pegel eines Wasserstandes in einem Wasserabscheideraum eines Treibstoff-Filters in einem Kraftfahrzeug überwacht werden kann. Bei diesem Sensormodul sind ein die Pole tragender Gewindebolzen und ein elektrischer Flachstecker sowie eine Leiterplatte koaxial in einem Gehäuse aus Kunststoff angeordnet. Dabei ist das Gehäuse schematisch dargestellt und mit seinem Gewindebolzen sowie einem seitlichen Rohrstutzen für den Ablauf des abgeschiedenen Wassers einteilig ausgeführt. Um hier den Flachstecker, die Leiterplatte und die Elektrode im Gehäuse des Sensormoduls zu befestigen und zu haltern, ist das Gehäuse mit einem Epoxidharz ausgegossen. Diese Bauweise ist hinsichtlich Bauaufwand, Kosten und Sicherheit im Betrieb unbefriedigend. Auch kann bei diesen Gewindebolzen aus Kunststoff zwischen den Polen im Betrieb ein Wassertropfen verbleiben und die Messung des Wasserstandes nachteilig beeinflussen.

Ferner ist aus der DE 30 09 899 A1 ein Flüssigkeitsfilter mit einem Wassersensor bekannt, der in einem Verschlussstopfen am Boden eines Filtergehäuses eingebaut ist. Der Verschlussstopfen weist hier ein in den Wasserspeicherraum ragendes Rohr auf, auf dem außen ein den Wasserstandspegel anzeigender Schwimmer geführt ist, der magnetisch einen im Rohr angeordneten elektrischen Schalter betätigt. Für den Wasserablass ist im Verschlussstopfen eine eigene Ablassschraube vorgesehen. Dieser Sensormodul baut aufwendig und groß und benötigt für die beiden Funktionen Wasserstandsanzeige und Wasserablassen getrennte Bauelemente, wofür in vielen Anwendungsfällen kein ausreichender Raum zur Verfügung steht. Zudem baut der Sensormodul kostspielig und weist ein relativ hohes Gewicht auf, was besonders bei mobilen Einsatzfällen unerwünscht ist.

Das Patent US 4,745,893 zeigt einen Ölstandsmesser mit einem in einen Ölbehälter einschraubbare Sensorkörper. Der Sensorkörper hat ein Paar Elektroden. Der Sensorkörper umfasst ein dem Ölstand zugewandtes, die Pole tragendes Gehäuseteil und ein ein Steckergehäuse aufweisendes Gehäuseteil.

### Vorteile der Erfindung

Der erfindungsgemäße Sensormodul zur Ermittlung eines Flüssigkeitspegels mit den kennzeichnenden Merkmalen des Anspruchs 1 hat demgegenüber den Vorteil, dass der Sensormodul dann, wenn er aus einem Behälter, insbesondere einem Kraftstoff-Filter, herausgeschraubt wird und wenn dabei Flüssigkeit, insbesondere Wasser, aus dem Behälter heraustritt, diese Flüssigkeit leicht aufgefangen und durch den Ablaufkanal kontrolliert an eine vorgesehene Stelle, beispielsweise in einen Wassertank, abgelassen werden kann. Der Sensormodul baut unter Beibehaltung der Funktion eines Verschlussstopfens relativ einfach und kompakt und ist dabei kostengünstig herstellbar. Dabei lässt sich eine Leiterplatte in trockener Weise in einem Hohlraum anordnen, so dass sie gegen äußere Einflüsse sicher geschützt ist. Auch weist der Sensormodul eine hohe mechanische Festigkeit auf, wobei die elektrischen Kontakte des Steckers geschützt und von außen leicht zugänglich sind. Auch weist der Sensormodul infolge seiner hohlen Bauweise ein geringes Gewicht auf, wodurch er sich für mobile Einsatzfälle besonders eignet. Die beiden Teile des Gehäuses lassen sich leicht herstellen und zusammenbauen.

Durch die in den Unteransprüchen aufgeführten Maßnahmen sind vorteilhafte Weiterbildungen und Verbesserungen des im Anspruch 1 angegebenen Sensormoduls möglich. So ergeben sich besonders vorteilhafte Ausgestaltungen nach den Ansprüchen 2 und 3, wodurch eine einfache, platzsparende Bauweise begünstigt wird, die mit relativ wenig Bauelementen auskommt. Zweckmäßig ist eine Ausführung nach Anspruch 4, so daß der Sensormodul auch als Ablaßschraube einsetzbar ist, wie dies vor allem bei einem Brennstoff-Filter mit Wasserspeicherraum erforderlich ist. Besonders zweckmäßig ist eine Ausführung nach Anspruch 5, wodurch eine genaue Arbeitsweise des Sensormoduls erreichbar ist, da infolge der wasserabweisenden Oberfläche kein Wassertropfen zwischen den Polen verbleiben und das Meßergebnis verfälschen kann. Außerdem wird bei dieser Bauweise nur wenig Epoxidharz verwendet, wodurch der Sensormodul einfacher und billiger baut. Gemäß Anspruch 6 läßt sich eine günstige Bauform erreichen, bei der der Sensormodul, vor allem in Bezug auf seine Funktion als Wasserablaßschraube, einfach und gut handhabbar ist. Dabei ist es günstig, wenn das Deckelteil gemäß Anspruch 7 ausgeführt wird, wobei der Rohrstutzen für den Wasserablaß das Gehäuseteil des Gehäuses durchdringt und somit für eine leichte und stabile Bauweise bei möglichst wenig Dichtstellen sorgt. Weitere vorteilhafte Ausgestaltungen ergeben sich aus den übrigen Ansprüchen 8 bis 12, wobei es besonders günstig ist, däß trotz des Abflußkanals nur eine einzige Dichtstelle zwischen Gehäuseteil und Deckelteil vorhanden ist, die sich fertigungstechnisch relativ leicht beherrschen läßt.

Ferner ist eine Ausbildung nach Anspruch 14 vorteilhaft, wenn die Abdichtung der Elektroden im Bolzenteil mit einem Dichtelement erfolgt, das vorzugsweise aus Gummi besteht; auf die Verwendung von Epoxidharz im Bereich der Pole kann dann verzichtet werden, wodurch sich die Bauweise vereinfacht. Eine zweckmäßige Ausbildung des Dichtelements ergibt sich dabei gemäß Anspruch 15 . Zur Vermeidung des Wassertropfen-Effekts ist es dabei günstig, wenn gemäß Anspruch 17 eine Trennwand zwischen den Polen angeordnet wird.

Weitere vorteilhafte Ausgestaltungen ergeben sich aus den übrigen Ansprüchen, der Beschreibung sowie der Zeichnung.

### Zeichnung

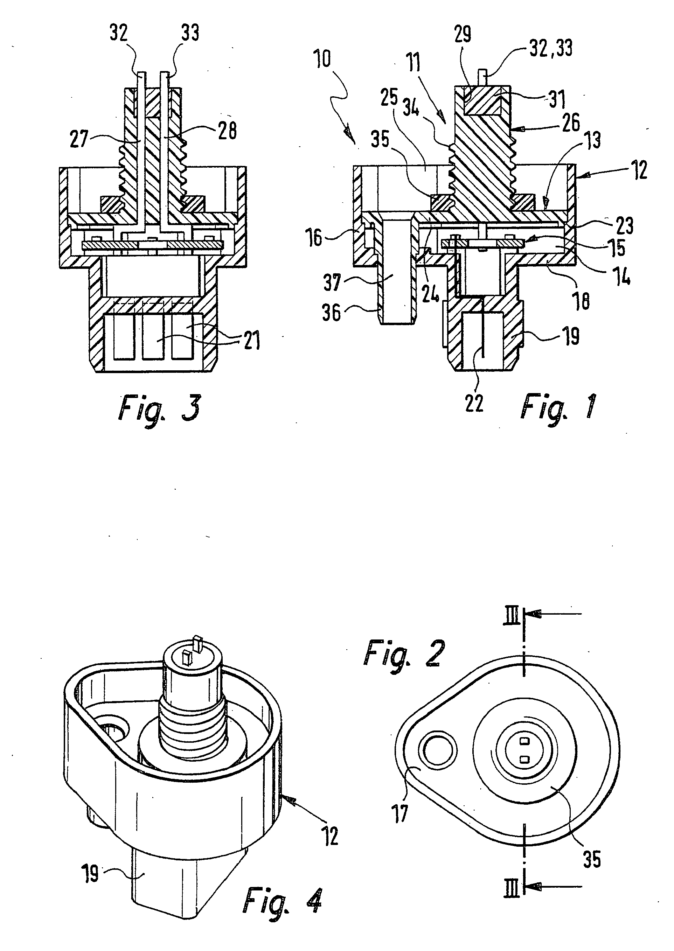

Zwei Ausführungsbeispiele der Erfindung sind in der Zeichnung dargestellt und in der nachfolgenden Beschreibung näher erläutert. Es zeigen Figur 1 einen Längsschnitt durch einen Sensormodul zur Ermittlung eines Wasserpegels in vereinfachter Darstellung, Figur 2 eine Draufsicht auf den Sensormodul nach Figur 1, Figur 3 einen Querschnitt nach III-III in Figur 2 und Figur 4 eine perspektivische Darstellung des Sensormoduls nach Figur 1; die Figuren 5, 6 und 7 zeigen eine zweite Ausführungsform des Sensormoduls in vergleichbaren Darstellungen.

### Beschreibung der Ausführungsbeispiele

Die Figur 1 zeigt einen Längsschnitt durch einen Sensormodul 10 zur Ermittlung eines Flüssigkeitspegels, wie er vor allem in Flüssigkeitsfiltern für Kraftstoffe verwendet wird, wo er zum Überwachen eines Wasserpegels in einem Wasserabscheideraum dient. Der Sensormodul 10 dient dabei zugleich als Verschlußstopfen am Boden eines nicht näher gezeichneten Flüssigkeitsfilters.

Der Sensormodul 10 weist ein zweiteiliges Gehäuse 11 auf, bei dem in ein im wesentlichen becherförmiges Gehäuseteil 12 ein Deckelteil 13 eingebaut ist. Gehäuseteil 12 und Deckelteil 13 umschließen dabei einen Hohlraum 14, in dem eine Leiterplatte 15 angeordnet ist.

Wie die Figur 1 in Verbindung mit Figur 2 näher zeigt, weist das Gehäuseteil 12 einen becherförmigen Abschnitt 16 auf, der im wesentlichen die Querschnittsform eines Kreises mit angeformtem Nocken aufweist und an dessen Boden 18 zentral ein Steckergehäuse 19 angeformt ist. Die am Boden 18 befestigte Leiterplatte 15 ist mit drei Steckerstiften 21 kontaktiert, wie dies aus Figur 3 näher erkennbar ist, die einen Querschnitt nach III-III in Figur 2 zeigt. Auf diese Weise bildet das Steckergehäuse 19 mit den Steckerstiften 21 einen Flachstecker 22, der im wesentlichen zentrisch und koaxial zur Längsachse des Gehäuseteils 12 angeordnet ist. An der Innenwand des Abschnitts 16 verläuft ein ringförmig umlaufender Absatz 23, auf dem das Deckelteil 13 mit einer ebenen Grundplatte 24 aufliegt. Die Außenkontur der Grundplatte 24 entspricht der Innenkontur des Abschnitts 16, so daß die Grundplatte 24 innerhalb des becherförmigen Abschnitts 16 den Hohlraum 14 von einem nach außen offenen Sammelraum 25 trennt. Die Grundplatte 24 ist an ihrem Außenumfang dicht und fest mit dem Gehäuseteil 12 verbunden. Da beide Teile 12 und 13 aus Kunststoff bestehen, kann dies zweckmäßigerweise durch Schweißen erfolgen, insbesondere durch Ultraschallschweißen, so daß eine dichte und feste Verbindung entsteht, welche den trockenen Hohlraum 14 vom nassen Sammelraum 25 trennt.

An der Grundplatte 24 ist einstückig mit dieser auf der Seite des Sammelraums 25 ein Bolzenteil 26 ausgebildet, in dem zwei Elektroden 27, 28 angeordnet sind. Das Bolzenteil 26 weist an seinem freien Ende eine stirnseitig offene Bohrung 29 auf, die mit einem wasserabweisenden Epoxidharz 31 gefüllt ist. Aus dem Epoxidharz 31 ragen die beiden Elektroden 27, 28 heraus und bilden die beiden Pole 32 bzw. 33, mit welchen der Wasserstand detektiert wird. Die beiden Elektroden 27 und 28 sind innerhalb des Hohlraums 14 mit Anschlüssen der Leiterplatte 15 kontaktiert. Auf der Leiterplatte 15 selbst befinden sich die erforderlichen elektrischen Auswerteschaltungen bzw. Schaltkreise, auf die hier nicht näher eingegangen wird. Das Bolzenteil 26 ist konzentrisch zur Längsachse des Sensormoduls 10 angeordnet und weist ferner ein Außengewinde 34 auf, so daß der Sensormodul 10 als Ablaßschraube verwendbar ist, der in eine nicht näher gezeichnete Gewindebohrung am Boden eines Filterelements bzw. eines Gehäuses einschraubbar ist. Zur Abdichtung ist ein Dichtring 35 vorgesehen, der unterhalb des Außengewindes 34 das Bolzenteil 26 umringt und der an der Grundplatte 24 anliegt.

Ferner ist an der Grundplatte 24 auf der entgegengesetzt zum Bolzenteil 26 liegenden Seite ein Rohrstutzen 36 angeordnet, der einen mit dem Sammelraum 25 verbundenen Auslaßkanal 37 bildet. Dieser Rohrstutzen 36 ist einstückig mit der Grundplatte 24 ausgeführt, verläuft parallel zur Längsachse des Sensormoduls 10 und ist in radialem Abstand von dieser Längsachse angeordnet, so daß der Rohrstutzen 36 im Bereich des Nockens 17 liegt. Der Rohrstutzen 36 durchdringt dabei den Hohlraum 14 und auch den Boden 18 des Gehäuseteils 12, so daß sich insgesamt eine stabile Bauweise für das Gehäuse 11 ergibt. Durch die nockenförmige Ausbildung von Gehäuseteil und Deckelteil 13 läßt sich der Ablaufkanal 37 für eine Flüssigkeit günstig in axialem Abstand zum zentral liegenden elektrischen Flachstecker 22 anordnen, wobei die kompakte Bauweise des Sensormoduls 10 gerade für die Funktion als Ablaßschraube erhalten bleibt.

Die Wirkungsweise des Sensormoduls 10 zur Ermittlung eines Flüssigkeitspegels, insbesondere des Wasserpegels in einem Kraftstoff-Filter, wird prinzipiell als bekannt vorausgesetzt. Dabei ist der Sensormodul 10 in ein nicht näher gezeichnetes Aggregat, insbesondere den Boden eines Flüssigkeitsfilters, eingeschraubt, in dem ein Wasserpegel detektiert werden soll. Dabei ragt das Bolzenteil 26 in einen zugeordneten Wasserspeicherraum und gibt ein Signal, wenn ein steigender Wasserpegel die Pole 32, 33 erreicht und dabei den elektrischen Widerstand zwischen diesen verändert. Das Bolzenteil 26 ist hier stirnseitig mit einem Epoxidharz 31 ausgebildet, aus dem die Pole 32, 33 herausragen. Die Oberfläche dieses Epoxidharzes 31 kann dabei vorteilhafterweise auch leicht konvex ausgeführt werden, so daß die wasserabweisende Wirkung dieses Harzes noch verstärkt wird. Auf diese Weise wird erreicht, daß im Betrieb kein Wassertropfen zwischen den Polen 32, 33 stehen bleiben kann, so daß eine genaue Arbeitsweise des Sensormoduls 10 zur Anzeige des Wasserpegels erreicht wird. Durch die Bauweise des Deckelteils 13 läßt sich dabei der Aufwand zur Verarbeitung von Epoxidharz 31 erheblich begrenzen. Durch die zweiteilige Bauart des Gehäuses 11 ist ein trockener Hohlraum 14 geschaffen, in dem nun die Leiterplatte 15 mit ihren Schaltkreisen in geschützter Weise angeordnet ist. Dabei kann vor dem Einbau des Deckelteils 13 im Gehäuseteil 12 die Leiterplatte 15 in einfacher Weise mit den Steckerstiften 21 einerseits sowie andererseits den Elektroden 27, 28 kontaktiert werden. Die Abdichtung des Deckelteils 13 im Gehäuseteil 12 läßt sich auf sichere und einfache Weise durchführen, so daß Leckverbindungen vom Sammelraum 25 in den trockenen Hohlraum 14 sicher vermieden werden. Die ineinander gesteckten Bauteile 12 und 13 ergeben einen Sensormodul 10, der neben seiner leichten Bauweise eine hohe Festigkeit des Gehäuses 11 aufweist, so daß er die Belastungen im Betrieb bei einer Verwendung als Ablaßschraube sowie die mechanischen Belastungen beim Anschließen eines Steckers am Flachstecker 22 sicher aushält. Dabei begünstigt die Nockenform der beiden Gehäuseteile 12 und 13, daß bei einer Verwendung als Ablaßschraube die Drehmomente im Sensormodul 10 sicher übertragen werden, ohne dabei die Funktion elektrischer Bauelemente zu gefährden. Die Durchführung des Rohrstutzens 36 durch das Gehäuseteil 12 begünstigt nicht nur die Festigkeit des Gehäuses 11, sondern sorgt auch für eine sichere Abführung von Wasser aus dem Sammelraum 25 nach außen hin, so daß der Hohlraum 14 gegenüber Flüssigkeit geschützt ist. Wie die perspektivische Darstellung des Sensormoduls 10 nach Figur 4 erkennen läßt, weist er einen relativ großen Sammelraum 25 für das Ablassen von Wasser auf und ist als Ablaßschraube bei kompakter Bauweise leicht handhabbar.

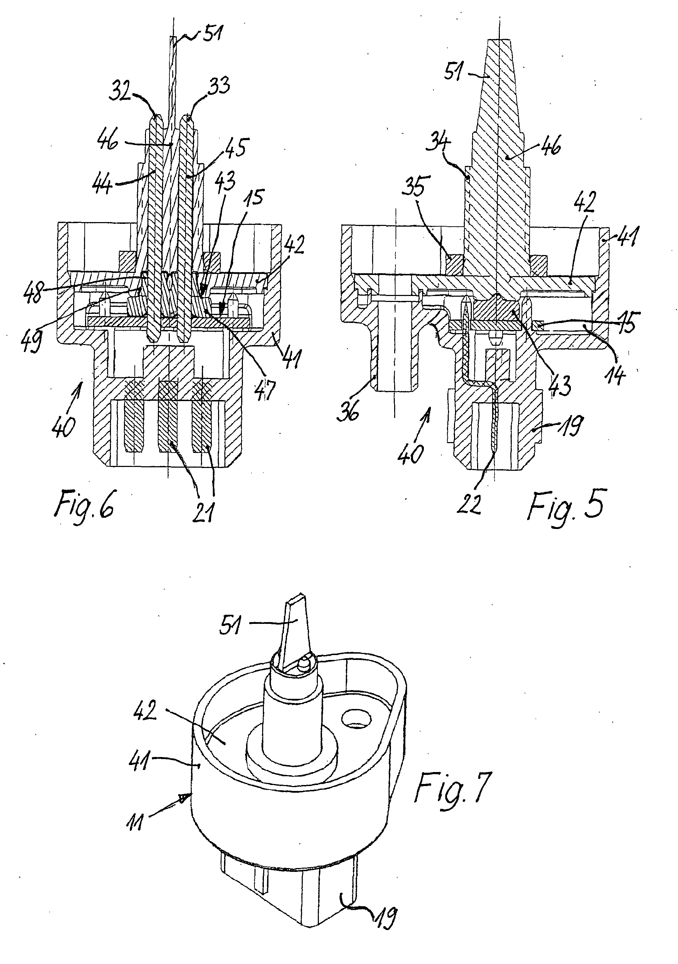

Die Figuren 5, 6 und 7 zeigen in entsprechender Weise, wie die Figuren 1, 3 beziehungsweise 4 einen zweiten Sensormodul 40, der sich vom ersten Sensormodul 10 vor allem durch eine andere Abdichtung der Elektroden unterscheidet; im übringen werden gleiche Bauelemente mit gleichen Bezugszeichen versehen.

Der zweite Sensormodul 40 hat ein Gehäuseteil 41 und ein Deckelteil 42, welche den Hohlraum 14 umschließen. In diesem Hohlraum 14 ist nun ein Dichtelement 43 angeordnet, das die Abdichtung der Elektroden 44, 45 im Bolzenteil 46 übernimmt, so dass kein Kraftstoff oder Wasser in den Hohlraum 14 gelangen kann. Dabei liegt das Dichtelement 43 mit einem quaderförmigen Flachteil 44 zwischen der Leiterplatte 15 und dem Deckelteil 42, während es mit die Elektroden 44, 45 umgreifenden, tüllenförmigen Anformungen 48 in eine passende Ausnehmung 49 des Deckelteils 42 ragt. Das Dichtelement 43 besteht aus einem elastischen Material, vorzugsweise Gummi oder einem anderen geeigneten Material. Die Elektroden 44, 45 sind über ihre ganze Länge, ausgehend von den Polen 32, 33 bis zu den die Leiterplatte 15 durchdringenden Enden, als gerade Stäbe ausgebildet, die in dazu passende Bohrungen im Bolzenteil 46 einbaubar sind. Auf diese Weise kann eine mit Epoxidharz gefüllte Bohrung 29 zur Abdichtung der Elektroden im Bolzenteil 46 entfallen, wodurch sich die Herstellung des Sensormoduls weiter vereinfacht. Am Ende des Bolzenteils 46 ist zwischen den Polen 32, 33 eine Tennwand 51 ausgebildet, so dass der störende Effekt einer Bildung von Wassertropfen vermieden wird.

Beim zweiten Sensormodul 40 ist der Rohrstutzen 36 für den Wasserablauf nun am Gehäuseteil 41 angeformt, so dass im Deckelteil 42 ein Loch verbleibt und das Deckelteil einfacher baut. Das Dichtelement 43 aus Gummi ist leicht montierbar und ergibt eine sichere Abdichtung des Hohlraums 14 gegenüber der Flüssigkeitsseite. Deckelteil 42 und Gehäuseteil 41 können weiterhin leicht miteinander dicht verschweißt werden, insbesondere durch UltraschallSchweißen.

Selbstverständlich sind an den gezeigten Ausführungsformen Änderungen möglich, ohne vom Gedanken der Erfindung abzuweichen. So kann der Abschnitt 16 anstelle der gezeigten Nockenform auch eine ovale oder andere zweckmäßige, geeignete Form aufweisen, ohne auf die Funktionen des Sensormoduls 10 als Wasserstandsanzeiger und als Wasserablaßschraube verzichten zu müssen. Obwohl das Außengewinde 34 zur Verwendung des Sensormoduls 10 als Ablaßschraube besonders vorteilhaft ist, kann anstelle dieses Gewindes 34 auch ein anderes Verschlußmittel treten; so läßt sich das Bolzenteil 26 auch so ausbilden, daß der Sensormodul 10 in eine zugeordnete Öffnung eingesteckt wird oder zum Beispiel durch einen Bajonettverschluß oder ein Steilgewinde befestigt wird. Auch der Flachstecker 22 läßt sich in anderer Weise ausführen, ohne auf die Vorteile des Sensormoduls 10 verzichten zu müssen. Beim zweiten Sensormodul können anstelle des einzigen Dichtelements auch zwei gleichartige Dichtelemente verwendet werden, ohne auf den Vorteil einer Vermeidung von Epoxidharz zur Abdichtung verzichten zu müssen; auch bei der Form des Dichtelements sind Änderungen an der gezeigten Ausführungsart möglich.

## Patentansprüche

1. Sensormodul zur Ermittlung eines Flüssigkeitspegels, insbesondere von Wasser in einem Kraftstoff-Filter, mit einem Gehäuse (11), das auf einer der Flüssigkeit zugewandten Seite an einem Bolzenteil (26, 46) zwei den Flüssigkeitspegel detektierende Pole (32, 33) und auf der entgegengesetzten, nach außen gewandten Seite einen elektrischen Steckeranschluss aufweist und das in seinem Inneren eine zwischen Pole (32, 33) und Steckeranschluss geschaltete Leiterplatte (15) aufnimmt,
wobei das Gehäuse (11) zweiteilig ausgebildet ist und aus einem ein Steckergehäuse (19) bildenden Gehäuseteil (12, 41) und einem das Bolzenteil (26, 46) umfassenden Deckelteil (13, 42) besteht, wobei das Deckelteil (13, 42) und das Gehäuseteil (12, 41) einen die Leiterplatte (15) aufnehmenden Hohlraum (14) begrenzen, der gegenüber der Flüssigkeitsseite (25) abgedichtet ist, **dadurch gekennzeichnet, daß** das Gehäuseteil (12, 41) des Gehäuses (11) mit dem Deckelteil (13, 42) einen zur Flüssigkeitsseite hin offenen, ringförmigen Sammelraum (25) begrenzt, der über einen Ablaufkanal (37) nach außen entlastet ist.

2. Sensormodul nach Anspruch 1, **dadurch gekennzeichnet, daß** das die Pole (32, 33) aufweisende Bolzenteil (26, 46) am Deckelteil (13, 42) und das Steckergehäuse (19) am Gehäuseteil (12, 41) im wesentlichen gleichachsig zueinander und zentral angeordnet sind und daß das Gehäuse (11) einen dazu seitlich versetzt liegenden Ablaufkanal (37) aufweist.

3. Sensormodul nach Aspruch oder 2, **dadurch gekennzeichnet, daß** das Deckelteil (13) in das Gehäuseteil (12) eingesetzt ist und einen parallel zum Bolzenteil (26) verlaufenden und dazu radial versetzt angeordneten Rohrstutzen (36) aufweist, der den Ablaufkanal (37) bildet.

4. Sensormodul nach einem der Ansprüche 1 bis 3, **dadurch gekennzeichnet, daß** das Bolzenteil (26, 46) ein zum Befestigen des Sensormoduls (10, 40) an einem Behälter dienendes Außengewinde (34) aufweist.

5. Sensormodul nach einem oder mehreren der Ansprüche 1 bis 4, **dadurch gekennzeichnet, daß** das Bolzenteil (26) an seinem freien Ende einen stirnseitig offenen Raum (29) aufweist, der mit wasserabweisendem Harz (31) ausgefüllt ist, aus dem die Pole (32, 33) herausragen.

6. Sensormodul nach einem der Ansprüche 1 bis 5, **dadurch gekennzeichnet, daß** das Gehäuseteil (12, 41) einen becherförmigen Abschnitt (16) aufweist, der im wesentlichen die Querschnittsform eines Kreises mit angeformten Nocken (17) hat und an dessen Boden (18) zentral das Steckergehäuse (19) insbesondere eines Flachsteckers (22), angeformt ist.

7. Sensormodul nach Anspruch 6, **dadurch gekennzeichnet, daß** der Rohrstutzen (36) des Deckelteils (13) im Bereich des Nockens (17) den Boden (18) und insbesondere den Hohlraum (14) durchdringt.

8. Sensormodul nach einem der Ansprüche 6 oder 7, **dadurch gekennzeichnet, daß** das Deckelteil (13, 42) eine Grundplatte (24) aufweist, deren Außenkontur der Innenkontur des becherförmigen Abschnitts (16) am Gehäuseteil (12, 41) entspricht.

9. Sensormodul nach Anspruch 8, **dadurch gekennzeichnet, daß** die Grundplatte (24) längs ihres Außenrandes mit dem Gehäuseteil (12, 41) dicht und fest verbunden ist, insbesondere verschweißt ist.

10. Sensormodul nach Anspruch 8 oder 9 **dadurch gekennzeichnet, daß** an der Grundplatte (24) das Bolzenteil (26) und der Rohrstutzen (36) an entgegengesetzten Seiten und zueinander radial versetzt angeordnet sind.

11. Sensormodul nach einem der Ansprüche 1 bis 10, **dadurch gekennzeichnet, daß** am Deckelteil (13, 42) ein Dichtring (35) angeordnet ist, der das Bolzenteil (26, 46) umringt und insbesondere an der Grundplatte (24) anliegt.

12. Sensormodul nach einem der Ansprüche 1 bis 11, **dadurch gekennzeichnet, daß** das Gehäuseteil (12, 41) und das Deckelteil (13, 42) aus Kunststoff bestehen.

13. Sensormodul nach Anspruch 5, **dadurch gekennzeichnet, daß** die Oberfläche des wasserabweisenden Harzes (31) an den Polen (32, 33) konvex ausgebildet ist.

14. Sensormodul nach einem oder mehreren der Ansprüche 1 bis 4, 6 bis 12, **dadurch gekennzeichnet, dass** zur Abdichtung der Elektroden (44, 45) im Bolzenteil (46) im Bereich des Hohlraums (14) ein elastisches Dichtelement (47) angeordnet ist.

15. Sensormodul nach Anspruch 14, **dadurch gekennzeichnet, dass** das Dichtelement (47) mit einem insbesondere quaderförmigen Flachteil (47) zwischen der Leiterplatte (15) und dem Deckelteil (42) angeordnet ist und mit die Elektroden (44, 45) umgreifenden tüllenförmigen Anformungen (48) in eine Ausnehmung (49) des Deckelteils (42) ragt.

16. Sensormodul nach einem der Ansprüche 14 und 15, **dadurch gekennzeichnet, dass** die Elektroden (44, 45) über ihre ganze Länge als gerade Stäbe ausgebildet sind.

17. Sensormodul nach einem der Ansprüche 14 bis 16, **dadurch gekennzeichnet, dass** das Bolzenteil (46) an seinem freien Ende eine zur Vermeidung von Wassertropfen zwischen den Polen (32, 33) dienende Trennwand (51) aufweist.

## Claims

1. Sensor module for the determination of a liquid level, in particular of water in a fuel filter, with a housing (11), which has on a side facing the liquid, at a pin part (26, 46), two poles (32, 33) detecting the liquid level and on the opposite, outwardly facing side an electrical connector terminal, and which receives inside it a circuit board (15) connected between the poles (32, 33) and the connector terminal, wherein the housing (11) is formed in two parts and consists of a housing part (12, 41), forming a connector housing (19), and a cover part (13, 42), enclosing the pin part (26, 46), wherein the cover part (13, 42) and the housing part (12, 41) delimit a cavity (14) that receives the circuit board (15) and is sealed off with respect to the liquid side (25), **characterized in that** the housing part (12, 41) of the housing (11) delimits with the cover part (13, 42) an annular collecting space (25) that is open towards the liquid side and is relieved in the outward direction by an outlet channel (37).

2. Sensor module according to Claim 1, **characterized in that** the pin part (26, 46) having the poles (32, 33) on the cover part (13, 42) and the connector housing (19) on the housing part (12, 41) are arranged substantially coaxially in relation to one another and centrally and **in that** the housing (11) has an outlet channel (37) lying laterally offset in relation thereto.

3. Sensor module according to Claim 1 or 2, **characterized in that** the cover part (13) is fitted into the housing part (12) and has a pipe stub (36), which runs parallel to the pin part (26), is arranged radially offset in relation thereto and forms the outlet channel (37).

4. Sensor module according to one of Claims 1 to 3, **characterized in that** the pin part (26, 46) has an external thread (34) that serves for fastening the sensor module (10, 40) to a container.

5. Sensor module according to one or more of Claims 1 to 4, **characterized in that** the pin part (26) has at its free end a space (29) that is open at the end face and is filled with water-repellent resin (31), from which the poles (32, 33) protrude.

6. Sensor module according to one of Claims 1 to 5, **characterized in that** the housing part (12, 41) has a cup-shaped portion (16), which has substantially the cross-sectional shape of a circle with formed-on lugs (17) and formed centrally on the bottom (18) of which is the connector housing (19), particularly of a flat connector (22).

7. Sensor module according to Claim 6, **characterized in that** the pipe stub (36) of the cover part (13) passes through the bottom (18), and in particular the cavity (14), in the region of the lug (17).

8. Sensor module according to either of Claims 6 and 7, **characterized in that** the cover part (13, 42) has a base plate (24), the outer contour of which corresponds to the inner contour of the cup-shaped portion (16) on the housing part (12, 41).

9. Sensor module according to Claim 8, **characterized in that** the base plate (24) is connected along its outer periphery to the housing part (12, 41) in a sealed and secure manner, in particular is welded.

10. Sensor module according to Claim 8 or 9, **characterized in that** on the base plate (24) the pin part (26) and the pipe stub (36) are arranged on opposite sides and radially offset in relation to one another.

11. Sensor module according to one of Claims 1 to 10, **characterized in that** on the cover part (13, 42) there is arranged a sealing ring (35), which encircles the pin part (26, 46) and in particular lies against the base plate (24).

12. Sensor module according to one of Claims 1 to 11, **characterized in that** the housing part (12, 41) and the cover part (13, 42) consist of plastic.

13. Sensor module according to Claim 5, **characterized in that** the surface of the water-repellent resin (31) is convexly formed at the poles (32, 33).

14. Sensor module according to one or more of Claims 1 to 4 and 6 to 12, **characterized in that** an elastic sealing element (47) is arranged for sealing off the electrodes (44, 45) in the pin part (46) in the region of the cavity (14).

15. Sensor module according to Claim 14, **characterized in that** the sealing element (47) is arranged with a flat part (47), in particular a cuboidal flat part (47), between the circuit board (15) and the cover part (42) and protrudes with the bush-shaped formations (48) that enclose the electrodes (44, 45) into a recess (49) of the cover part (42).

16. Sensor module according to either of Claims 14 and 15, **characterized in that** the electrodes (44, 45) are formed over their entire length as straight rods.

17. Sensor module according to one of Claims 14 to 16, **characterized in that** the pin part (46) has at its free end a dividing wall (51) that serves for avoiding water droplets between the poles (32, 33).

## Revendications

1. Module de capteur pour déterminer un niveau de liquide, notamment d'eau, dans un filtre à carburant, avec un carter (11) comportant sur un côté orienté vers le liquide, au niveau d'une partie de boulon (26, 46), deux pôles (32, 33) détectant le niveau de liquide et, sur le côté opposé orienté vers l'extérieur, une borne de fiche électrique et logeant à l'intérieur de lui une plaque conductrice (15) connectée entre les pôles (32, 33) et la borne de fiche ;
le carter (11) étant réalisé en deux parties et se composant d'une partie de carter (12, 41) formant un carter de fiche (19) et d'une partie de cache (13, 42) comprenant la partie de boulon (26, 46), la partie de cache (13, 42) et la partie de carter (12, 41) délimitant un espace creux (14) logeant la plaque conductrice (15), ledit espace creux étant étanchéifié par rapport au côté de liquide (25), **caractérisé en ce que** la partie de carter (12, 41) du carter (11) délimite avec la partie de cache (13, 42) un espace de collecte (25) de forme annulaire ouvert en direction du côté de liquide, ledit espace étant déchargé vers l'extérieur via un canal d'évacuation (37).

2. Module de capteur selon la revendication 1, **caractérisé en ce que** la partie de boulon (26, 46) comportant les pôles (32, 33) est disposée de façon centrale au niveau de la partie de cache (13, 42) et que le carter de fiche (19) est disposé de façon centrale au niveau de la partie de carter (12, 41) et que tous deux sont pour l'essentiel placés sur le même axe et que le carter (11) comporte un canal d'évacuation (37) reposant à cette fin de façon décalée en côté.

3. Module de capteur selon la revendication 1 ou 2, **caractérisé en ce que** la partie de cache (13) est insérée dans la partie de carter (12) et comporte une tubulure (36) s'étendant parallèlement à la partie de boulon (26) et disposée à cette fin de façon décalée dans le plan radial et formant le canal d'évacuation (37).

4. Module de capteur selon l'une quelconque des revendications 1 à 3, **caractérisé en ce que** la partie de boulon (26, 46) comporte un filet extérieur (34) servant pour la fixation du module de capteur (10, 40) au niveau d'un réservoir.

5. Module de capteur selon l'une quelconque des revendications 1 à 4 ou plusieurs d'entre elles, **caractérisé en ce que** la partie de boulon (26) comporte au niveau de son extrémité libre une chambre (29) ouverte vers le côté avant remplie de résine (31) hydrofuge et hors de laquelle les pôles (32, 33) ressortent.

6. Module de capteur selon l'une quelconque des revendications 1 à 5, **caractérisé en ce que** la partie de carter (12, 41) comporte une section (16) en forme de bécher ayant pour l'essentiel la forme en section transversale d'un cercle avec une came (17) raccordée et le carter de fiche (19) formé d'une fiche plate (22) étant notamment réalisé de façon centrale au niveau de son fond (18).

7. Module de capteur selon la revendication 6, **caractérisé en ce que** la tubulure (36) de la partie de cache (13) traverse le fond (18), et notamment l'espace creux (14), dans la zone de la came (17).

8. Module de capteur selon l'une quelconque des revendications 6 ou 7, **caractérisé en ce que** la partie de cache (13, 42) comporte une plaque de base (24) dont le contour extérieur correspond au contour intérieur de la section (16) en forme de bécher au niveau de la partie de carter (12, 41).

9. Module de capteur selon la revendication 8, **caractérisé en ce que** la plaque de base (24) est reliée de façon étanche et permanente, le long de sa bordure extérieure, à la partie de carter (12, 41), notamment soudée.

10. Module de capteur selon la revendication 8 ou 9, **caractérisé en ce que** la partie de boulon (26) et la tubulure (36) sont disposées au niveau de la plaque de base (24) au niveau des côtés opposés et disposées de façon décalée l'une par rapport à l'autre dans le plan radial.

11. Module de capteur selon l'une quelconque des revendications 1 à 10, **caractérisé en ce qu'**une bague étanche (35) est disposée au niveau de la partie de cache (13, 42), ladite bague étanche ceignant la partie de boulon (26, 46) et reposant notamment contre la plaque de base (24).

12. Module de capteur selon' l'une quelconque des revendications 1 à 11, **caractérisé en ce que** la partie de carter (12, 41) et la partie de cache (13, 42) sont en matière plastique.

13. Module de capteur selon la revendication 5, **caractérisé en ce que** la surface de la résine (31) hydrofuge est réalisée de façon convexe au niveau des pôles (32, 33).

14. Module de capteur selon l'une quelconque des revendications 1 à 4, 6 à 12, ou plusieurs d'entre elles, **caractérisé en ce que** pour étanchéifier les électrodes (44, 45) dans la partie de boulon (46), un élément d'étanchéité (47) élastique est disposé dans la région de l'espace creux (14).

15. Module de capteur selon la revendication 14, **caractérisé en ce que** l'élément d'étanchéité (47) est disposé, avec une partie plate (47), notamment en forme de parallélépipède rectangle, entre la plaque conductrice (15) et la partie de cache (42) et, avec la partie (48) en forme de tétine enceignant les électrodes (44, 45), dans un évidement (49) de la partie de cache (42).

16. Module de capteur selon l'une quelconque des revendications 14 et 15, **caractérisé en ce que** les électrodes (44, 45) prennent la forme, sur toute leur longueur, de tiges droites.

17. Module de capteur selon l'une quelconque des revendications 14 à 16, **caractérisé en ce que** la partie de boulon (46) comporte au niveau de son extrémité libre une paroi de séparation (51) servant à éviter la présence de gouttes d'eau entre les pôles (32, 33).
